# EUROPEAN PATENT APPLICATION

(11) **EP 4 763 435 A1**
(43) Date of publication of application: **24.06.2026**
(21) Application number: 25192844.6
(22) Date of filing: 30.07.2025
(51) Int. Cl.: B25J 9/16

(54) **DEVICE AND METHOD WITH PLAN GENERATION BASED ON SCENE GRAPH AND NATURAL LANGUAGE PROMPT**

(30) Priority: 18.12.2024 KR 20240189583
(71) Applicant: Samsung Electronics Co., Ltd., Suwon-si, Gyeonggi-do 16677 (KR)
(72) Inventor: CHO, Hyunwoong, 16678 Suwon-si (KR); BYUN, Junyoung, 16678 Suwon-si (KR); YOO, Jaewook, 16678 Suwon-si (KR)
(74) Representative: Arnold & Siedsma

(57) **Abstract**

An electronic device: acquires a prompt that describes a task for a robot to perform in a predefined space; generates, by a first machine-learning-based model, based on a scene graph corresponding to the predefined space and the prompt being inputted thereto, a first task plan; based on the first task plan not being able to satisfy the task, provide the first machine-learning-based model with a request to extract a relevant node to the task from among nodes of the scene graph; generates a candidate node by a second machine-learning-based model, based on additional modal data of the relevant node and a node generation request based on the additional modal data being inputted to the second machine-learning-based model; and generates a second task plan for the robot to perform the task by inputting the candidate node and the prompt to the first machine-learning-based model.

## Description

### BACKGROUND

### 1. Field

The following description relates to a device and method with plan generation based on a scene graph and a natural prompt.

### 2. Description of Related Art

Most robots are programmed to perform a certain task. For example, robots on assembly lines are programmed to recognize a certain object and perform a certain manipulation on the object. In addition, some robots may perform a certain task according to a user interface input corresponding to the task. For example, a cleaning robot may perform a cleaning task in response to a voice command, "Robot, clean up".

However, a user interface input that causes a robot to perform a certain task generally needs to be explicitly mapped to the task. Accordingly, robots may not be able to perform a task corresponding to a user's natural language command when receiving various natural language commands for tasks that are not explicitly mapped or are not pre-defined.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an electronic device includes: one or more processors; and a memory storing instructions that when executed by the one or more processors cause the electronic device to: acquire a prompt that describes a task for a robot to perform in a predefined space; generate, by a first machine-learning-based model, based on a scene graph corresponding to the predefined space and the prompt being inputted thereto, a first task plan; based on the first task plan not being able to satisfy the task, provide the first machine-learning-based model with a request to extract a relevant node to the task from among nodes of the scene graph; generate a candidate node by a second machine-learning-based model, based on additional modal data of the relevant node and a node generation request based on the additional modal data being inputted to the second machine-learning-based model; and generate a second task plan for the robot to perform the task by inputting the candidate node and the prompt to the first machine-learning-based model.

The candidate node may be inserted into the scene graph based on the second task plan being able to satisfy the task.

The instructions may be further configured to, when executed by the one or more processors, cause the electronic device to command the robot to perform operations according to the second task plan in response to the second task plan being determined to be able to satisfy the task.

The instructions may be further configured to, when executed by the one or more processors, cause the electronic device to: command the robot to search for and capture audio data or image data in response to the second task plan not being able to satisfy the task; and insert the captured audio data or image data into the scene graph.

The instructions may be further configured to, when executed by the one or more processors, cause the electronic device to: select the candidate node from among multiple generated candidate nodes; and generate a new task plan based on the selected candidate node and apply the new task plan to update the scene graph.

The scene graph, in an initial form, may include levels of nodes, the levels including an object-level level, and the additional modal data may include image data or audio data representing a thing corresponding to a node of the object-level level.

The electronic device may further include a storage storing the additional modal data, which is mapped to the relevant node level in the scene graph, and the instructions may be further configured to, when executed by the one or more processors, cause the electronic device to generate the candidate node and load the additional modal data from the storage based on the additional modal data being mapped to the relevant node.

The instructions may be further configured to, when executed by the one or more processor, cause the electronic device to generate the candidate node to include attribute information of a target object based on the prompt indicating an attribute of the target object in the task.

The first machine-learning-based model may be a text generation model, and the instructions, when executed by the one or more processors, cause the electronic device to provide the first machine-learning based model with a serialized representation of the scene graph.

The first machine-learning-based model and the second machine-learning-based model may be the same multi-modal generation model.

In another general aspect, a method of generating a plan is performed by one or more processors, and the method includes: attempting to generate a first task plan for a robot to perform a task by inputting a scene graph and the prompt to a first machine-learning-based model; based on failure to generate the first task plan or the first task plan not enabling the robot to complete the task, accessing a relevant node of the scene graph by inputting, to the first machine-learning-based model, a request for extract from the scene graph any nodes that are relevant to the task; generating a candidate node by a second machine-learning-based model, based on additional modal data of the relevant node and a node generation request based on the additional modal data being inputted to the second machine-learning-based model; and generating a second task plan for the robot to perform the task by providing the candidate node and the prompt to the first machine-learning-based model.

The method may further include inserting the candidate node into the scene graph based on the second task plan enabling the robot to complete the task.

The method may further include instructing the robot to perform operations according to the second task plan based on a determination that the second task plan enables the robot to complete the task.

The method may further include: instructing the robot to search for and capture image or audio data based on the second task plan not being able to be generated or not enabling the robot to complete the task; and associating the image or audio data with the scene graph.

The generating the candidate node may include generating multiple candidate nodes and selecting the candidate node from among candidate nodes, and the method may further include generating a new task plan based on the selected candidate node and applying the new task plan to update the scene graph.

The scene graph, in an initial form, may include levels of nodes including an object-level level, and the additional modal data may include audio or image data representing a thing corresponding to a node of the object-level level.

The additional modal data may be mapped to a node of a specific level in the scene graph, and the generating the candidate node may include, based on the mapping, loading the additional modal data mapped from a storage when generating the candidate node.

The candidate node may be generated to include attribute information of a target object based on the prompt indicating an attributes of the target object in the task.

In another general aspect, a method performed by a computing device includes: accessing a scene graph having a hierarchical structure of nodes and connections therebetween that represent the hierarchical structure of a space, the nodes representing respective objects or spaces in the space, wherein images of the objects or spaces are respectively associated with the nodes thereof; determining that the scene graph fails to produce a task plan for completion of a task by an agent within the space; based on the determining, identifying a node, among the nodes, that is relevant to performing the task; based on the identification of the node, extracting additional data about the space from the image associated with the identified node; and generating a final task plan for completion of the task by the agent within the space, the final task plan generated based on the additional data and the scene graph.

One or more neural network models may perform inference on the scene graph to determining that the scene graph fails and to generate the final task plan, and the agent may be a robot.

Other features and aspects will be apparent from the following detailed description, the drawings, and the claims.

### BRIEF DESCRIPTION OF THE DRAWINGS

FIG. 1 illustrates an example of generating a task plan for executing an input task by using a scene graph, according to one or more embodiments.
FIG. 2 illustrates an example of a structure of a scene graph and a representation of the scene graph, according to one or more embodiments.
FIG. 3 illustrates an example of a method of generating a task plan according to one or more embodiments.
FIG. 4A illustrates an example of generating a task plan to perform an input task by providing a machine-learning-based model with a candidate node prepared by using associated additional modal information and a scene graph, according to one or more embodiments.
FIG. 4B illustrates an example of a structure of a large language model (LLM) based on a transformer as a machine-learning-based model according to one or more embodiments.
FIG. 5 illustrates an example of generating a first task plan using a machine-learning-based model and a scene graph according to one or more embodiments.
FIG. 6 illustrates an example of extracting a node relevant to a task from a scene graph according to one or more embodiments.
FIG. 7 illustrates an example of generating a candidate node that may be connected to a relevant node by using additional modal information associated with a scene graph according to one or more embodiments.
FIG. 8 illustrates an example of generating a second task plan using a machine-learning-based model from a scene graph, a candidate node, and a prompt, according to one or more embodiments.
FIG. 9 illustrates an example of generating a candidate node and a task plan by using a multi-modal foundation model (MMFM), according to one or more embodiments.
FIG. 10 illustrates an example of an electronic device according to one or more embodiments.
FIG. 11 illustrates an example of a planning system according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes and modifications of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As nonlimiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

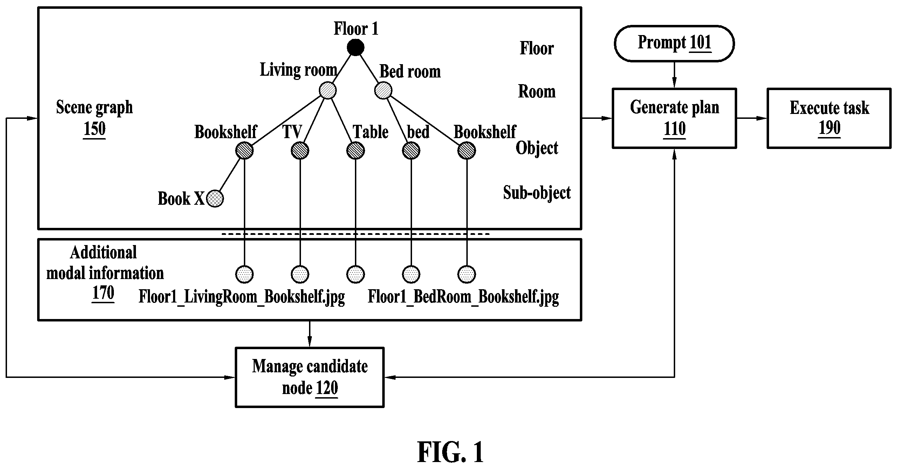

FIG. 1 illustrates an example of generating a task plan for executing an input task by using a scene graph, according to one or more embodiments.

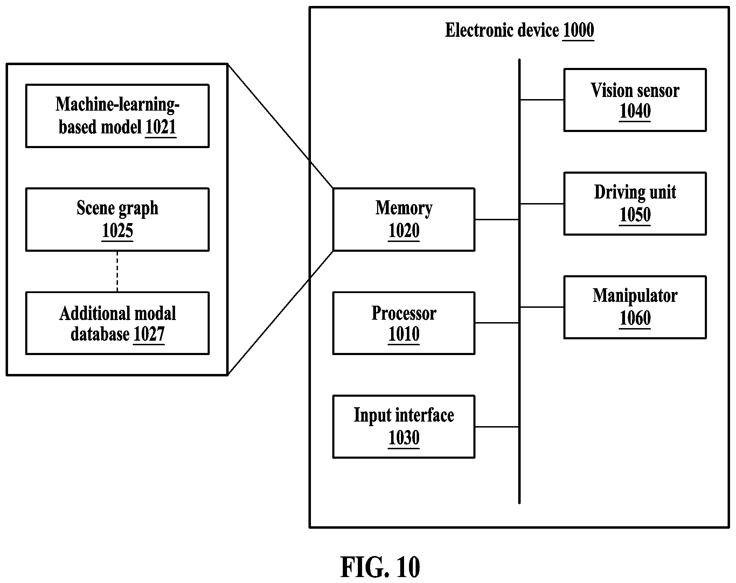

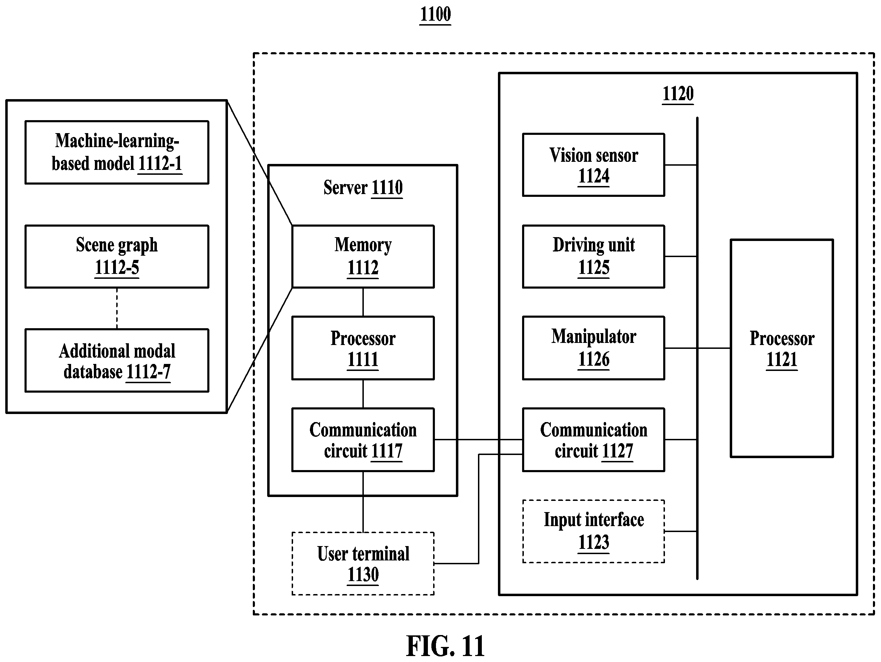

According to an embodiment, an electronic device (e.g., the electronic device 1000 of FIG. 10 or the electronic device 1100 of FIG. 11) may generate a task plan for the performance of an input task (the task plan may be executed by the electronic device or by another device). A task is generally a goal that needs to be achieved in a physical space and/or a virtual space (in some implementations there may be no difference, since a physical space is often modeled as a virtual space). For example, the input task may include an exploration task for searching for a specific object in a given scene and/or a manipulation task for interacting with the specific object.

The electronic device may cause an actor to perform the task in the given scene (e.g., the physical space and/or the virtual space). The actor may be, for example, a robot having a physical substance in the real world, an avatar implemented in a virtual world, or an actor that may explore the physical space or the virtual space. Although an example of a robot that explores the physical space as the actor or manipulates an object in the physical space is mainly described herein, examples are not limited thereto. The electronic device may command the actor to perform the task, or the electronic device itself may perform the task as the actor. An example of the electronic device itself being an integrated robot is shown in FIG. 10. An example of a system in which a server that commands a task is separate from a robot that performs the task is shown in FIG. 11.

The electronic device may receive a prompt 101 that instructs a task, and in operation 110 the electronic device may generate a plan for the inputted task prompt. For example, inputted task for which the task plan is generated may be in the form a natural language prompt; the inputted task may be of open vocabulary (i.e., not defined in advance). The electronic device may generate the task plan by using a machine-learning-based model (the electronic device may provide an embodied artificial intelligence (AI)). The electronic device may generate the task plan using, as the machine-learning-based model, a large language model (LLM) configured to process human natural language commands. For the generating the task plan, information on an environment (e.g., a scene graph 150 of a scene) around the actor and/or the goal may be provided to the machine-learning-based model (e.g., the LLM).

As noted, the electronic device may generate the task plan to perform the input task based on the scene graph 150. Task planning may be performed by inputting the scene graph 150 (a serialized representation) to the LLM together with the prompt 101 that instructs the task. The scene graph 150 may be data that spatially represents a given scene according to a defined ontology. Generally, an ontology is a formal representation of knowledge and may have a structured hierarchy of concepts. The defined ontology may be set of rules or vocabulary for common understanding and may be represented by using a graph model (not the scene graph 150). In this case, a concept not defined in the ontology may not be readily processed.

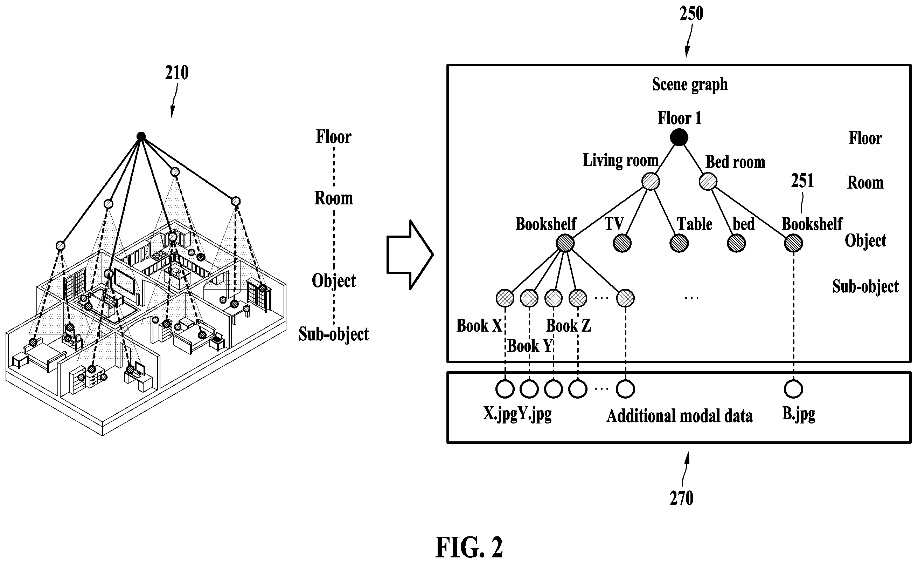

In a scene graph according to one or more embodiments, without restrictions, a node may represent a concept (e.g., an object in the scene graph 150, a location, etc.) and an edge may represent a relationship (e.g., a spatial and/or positional relationship between the object and another object in the scene graph 150) between concepts. The scene graph 150 is described with reference to FIG. 2.

For example, the scene graph 150 may represent a spatial arrangement of objects in a physical space and may also be referred to as a three-dimensional (3D) scene graph. The 3D scene graph may be a map that represents a spatial concept as a graph and may be a spatial concept map organized like how a person understands a space. The scene graph 150 may be a data form in a hierarchical semantic graph structure, including topological information for task planning. For example, edges between nodes may typically represent a containment relationship. Referring to the example in FIG. 1, "Floor 1" contains "Living room", which contains "Bookshelf", which contains "Book X". In some implementations, the 3D scene graph may be implemented as a tree graph. The 3D scene graph may efficiently represent a surrounding environment where an actor (e.g., the embodied AI) of the task operates. The 3D scene graph may be provided to a task planner as a text-based serialized representation (e.g., in JavaScript object notation (JSON) format). The task planner may receive and process various human commands in a natural language (such commands describing the input task, for example). The task planner may be, for example, the machine-learning-based model and may be implemented in the LLM.

A pre-defined list of tasks performable by the actor in the given scene may not be required (although use of same is not necessarily precluded). The electronic device may generate the task plan with reference to the scene graph 150 in response to a natural language prompt input (e.g., a textual prompt input by a user or a textual prompt derived from a voice input).

In operation 190, assuming that a task plan could be generated for the input task, the electronic device may attempt to execute the task plan to verify the executability thereof for the input task. If the generated task plan is executable, the electronic device may perform operations according to the task plan. If the generated task plan is not executable, the electronic device may newly attempt to generate a task plan, but with adjustments for the same, as described below. In some cases or implementations, a task plan may not even be able to be generated for the input task with the scene graph 150 as-is. In which case the same approach may be used, namely, a new attempt may be made to generate a task plan (e.g., by using new/additional modal information).

In operation 120, the electronic device may manage a candidate node of the scene graph 150. The candidate node of the scene graph 150 may be adaptively generated based on additional modal information 170 according to the input task. If the initial task plan is not executable (or generatable), the electronic device may generate (or make available/visible) the candidate node, which is potentially to be used as additional/supplemental information in a new attempt to generate a task plan for the input task. That is, the candidate node may include information potentially used for task planning. A temporary candidate node of the scene graph 150 may be generated based on the additional modal information 170 according to the input task.

The additional modal information 170 is information associated with the scene graph 150 and may be of a modality different from a modality of the scene graph 150. For example, if the modality of the scene graph 150 is a text type, the modality of the additional modal information 170 may be an image type, a video type, an audio type, or another type of modality different from the text type. For example, if a text value of a node of the scene graph 150 is "bookshelf", additional non-text-modal data may be an image of the bookshelf. However, the additional modal information 170 is not required to be a modality different from the modality of the scene graph 150. The additional modal information 170 may include any additional information, other than the information represented by the scene graph 150, whether represented as the same modality (e.g., the text type) as that of the scene graph 150 or as a different modality (e.g., non-text). Usually, however, the modality of the scene graph 150 will differ from the modality of the additional modal information 170, in which case the information including the scene graph 150 and the additional modal information 170 may be referred to as multi-modal scene information.

The additional modal information 170 may be mapped to (associated with) an object of a specific level (e.g., an object-level) in the scene graph 150. Pieces of additional modal information 170 may be stored for respective objects (e.g., each object) of the specific level (e.g., the object-level) in the scene graph 150. The additional modal information 170 associated with an object in the scene graph 150 may include data visually capturing the corresponding object (e.g., an image or a point cloud) or data auditorily capturing the object (e.g., a sound generated by the object). Visual object data may be, for example, an image (e.g., a red, green, and blue (RGB) color image) of the object and/or depth data (e.g., a point cloud) of the object.

In some implementations, the additional modal information 170 may be stored in advance in the scene graph 150, and the electronic device may initially (e.g., when making an initial attempt to generate a task plan for the input task) screen off (mask out) nodes that can be used to as candidate nodes from among nodes of the specific level of the scene graph 150. For example, the electronic device may extract nodes (e.g., relevant nodes) relevant to the task from among the nodes of the scene graph 150. If the plan is not executable, the electronic device may select a task-relevant object list to perform the task.

The electronic device may generate (or select) a candidate node dependent on the task-relevant nodes, based on a result of analyzing additional modal data (e.g., an image) mapped to the relevant nodes of the task-relevant object list. Accordingly, the electronic device may generate a temporary candidate node as a sub-node for at least one relevant node rather than expanding to a sub-level of all the nodes of the specific level. Accordingly, the electronic device may generate an item required to perform the input task as a candidate node.

In addition, the electronic device may selectively update a candidate node to the scene graph 150. For example, the electronic device may update the scene graph 150 depending on the executability of the generated plan by using the candidate node. For example, the electronic device may add the candidate node to the scene graph 150 if the plan is verified to be executable in a simulation result for the plan generated by using the candidate node. In other words, a candidate node may be generated, and, if it facilitates execution of a plan, it may be added to the scene graph 150 (albeit possibly hidden/masked) for future use of other input tasks. For another example, the electronic device may add the candidate node to the scene graph 150 if the task plan is successfully performed (or generated) using the generated candidate node. Accordingly, the electronic device may provide the optimized scene graph 150 to/for the user in a corresponding environment (e.g., the scene) by updating the scene graph 150 in response to its contribution to the success of a task requested by the user.

For reference, the originally generated scene graph 150 may be organized in shallow/flat hierarchy. For example, the original scene graph 150 may be configured in a hierarchical structure having relatively few/minimal levels for a space where a task is performed. If the first plan generated based on the given scene graph 150 fails, the electronic device may update the scene graph 150 to have an expanded level (e.g., below the where the task has been tested) by adding a candidate node dynamically generated based on the additional modal information 170 associated with the scene graph 150 as described above to the scene graph 150.

In previous systems, a predefined ontology would limit what tasks could be inputted by humans and implemented with static 3D scene graphs, or, an ontology might not have been definable. In addition, to provide sufficient detail for task planning, a 3D scene graph would be implemented with a deep hierarchy (deep levels). However, very deep hierarchies include a tremendous amount of information, and an AI model would not be able to readily perform/plan a task in real time. With previous techniques, a pre-defined task list may be given to a robot in a natural language. In such a case, the robot may determine granularity and a subset of an object and a scene structure to be included in a map. However, where the robot is actually deployed, the user may desire a different command at some time. For a task list defined in advance, a foundation model may not readily process open-vocabulary user commands that are outside the predefined task list.

If a 3D scene graph includes a huge amount of information, the information of a partial graph with most sub-levels having been collapsed/masked may be used for task-planning. A collapsed 3D scene graph may be provided to the LLM. If a node that is the most relevant to task-performing is expanded (not masked/hidden), then the corresponding task may be performed. However, if the requires a node that happens to be not included in the pre-defined 3D scene graph (i.e., is masked/hidden), processing of the task may be difficult or impossible. In addition, if a scene graph includes nodes corresponding to all books in the bookshelf, for example, excessive revisits to the scene graph and search operations (e.g., collapse or expansion) may be performed, and information quantity may significantly increase. In addition, the number of inferences of the LLM may also significantly increase because expansion and collapse are iterated until an executable plan is created for every node.

With embodiments described herein, multi-modal scene information may be used that associates the additional modal information 170 with the scene graph 150 (e.g., an initial scene graph) having hierarchy with relatively shallow depth. The electronic device may implement the LLM with decreased memory usage and decreased number of tokens, based on the scene graph 150 with decreased depth. In addition, the electronic device may provide the expandability of the scene graph 150 by using the additional modal information 170. Accordingly, the electronic device may improve the chance of success of performing open-vocabulary tasks while improving the inference performance of the machine-learning-based model.

FIG. 2 illustrates an example of a structure of a scene graph and a representation of the scene graph, according to one or more embodiments.

An electronic device may generate a scene graph 250 for a scene. A space 210 corresponding to the scene may be, for example, a physical space, a virtual space, or a mixed reality space, which is a mixture of virtual reality and a physical space, as the space 210 where a task may be performed by an actor. The relation between the scene graph 250 and the space is not overly significant; the techniques described may be applied to any scene graph, regardless of what the scene graph represents, if anything.

The scene graph 250 is a hierarchical structure of at least one object, an entity, or an element in the scene, and the scene graph 250 may a spatial context or relationship of the object, the entity, or the element. The scene graph 250 may include nodes that represent the objects/entities/elements and edges that represent the spatial relationships of the objects/entities/elements in the space 210 where a task may be performed by a robot (e.g., a physical robot in the real world), an avatar (e.g., the avatar implemented in a virtual world), or an agent (e.g., the agent that may explore the physical space or the virtual space).

In some implementations, the electronic device may itself construct the scene graph 250. For example, the electronic device may collect information about the space 210 by exploring the space 210 corresponding to the scene. Accessible locations in the space 210 may be visited and data (e.g., visual data and/or auditory data) of various modalities may be collected at the visited locations. The electronic device may acquire the data of various modalities through a sensor (e.g., a vision sensor and/or a sound sensor). The electronic device may generate nodes corresponding to elements (e.g., objects, rooms, or floors) constituting the space 210 and edges between the nodes, based on the result of analyzing the collected information about the space 210 (e.g., using photometric scene reconstruction or the like). For example, the scene graph 250 may be structured to one or more levels including an object-level. For example, the scene graph 250 may include an object-level corresponding to objects and space levels corresponding to divisions of the space 210 (e.g., the rooms or the floors) in which the objects reside. In an example, the depth of the scene graph 250 from the uppermost level to the lowermost level (e.g., the object-level as a specific level) may be formed as shallow as possible.

An initial scene graph may include nodes of multiple levels including the specific level. The specific level may be the object-level. The object-level may be characterized as having items (e.g., the object) that are interactable (e.g., manipulatable) by the actor (e.g., the robot). For example, its spatial location or its state may be changed by the actor.

The initial scene graph may be a spatial representation of a house, a factory, or a facility, for example, and may include nodes of three levels, which are a floor-level, a room-level, and the object-level. Each object at the object-level may include sub-objects thereof. For example, a "sauce basket" object might include sub-objects, like ketchup and mayonnaise. However, if a task input by a user is "bring me a sauce basket", information about the particular sauces (e.g., ketchup and mayonnaise) inside the sauce basket may be irrelevant to planning or performing the task. Accordingly, the electronic device may reduce the use of unnecessarily detailed information by using the initial scene graph of a shallow hierarchical structure. The scene graph 250 is input to a machine-learning-based model (e.g., an LLM) in a text format. Thus, the scene graph 250 having a shallow hierarchical structure may have an advantageous effect in reducing memory usage and the number of input tokens inputted to the LLM and used thereby for inference.

According to an embodiment, the electronic device may store additional modal information (e.g., non-text data) associated with the scene graph 250. The electronic device may map the additional modal information to a node of the specific level of the scene graph 250. For example, the specific level may be the object-level. Additional modal data 270 may be visual information or auditory information representing a thing corresponding to a node of the object-level. The electronic device may associate pieces of the additional modal information with respective nodes of the specific level as additional information. However, examples are not limited thereto, and the electronic device may map the additional modal information of an additional modal database to at least one node (e.g., some nodes) of the specific level. In the example illustrated in FIG. 2, image data "B.jpg" for "bookshelf" may be mapped as the additional modal data 270 to a node 251 "bookshelf".

The electronic device may map visual information or auditory information of a corresponding object to a node of the specific level (e.g., the object-level). For example, the electronic device may store, to the node of the object-level, depth data (e.g., a point cloud) and/or image data representing a visual form of the corresponding object (the object represented by the node). The depth data and/or the image data may be data generated based on an object located within a field of view (FOV) (e.g., the center of FOV) of a sensor (e.g., a camera sensor, a depth sensor, or an RGB-depth (RGB-D) sensor) being captured by the sensor. The data of the point cloud may include 3D points representing an object corresponding to a node and 3D points representing other objects around the object and the background. For another example, the electronic device may store data representing a sound (e.g., a sound derived from an object or generated by the object) relevant to the object in association with a node of the object-level. In addition, additional modal information may be abstract or derived information. For example, a feature (e.g., an audio feature extracted from audio data or an image feature extracted from image data by using a neural network) extracted from data capturing an object may be mapped to a node corresponding to the object.

However, examples are not limited to the additional modal data 270 being mapped to the node of the object-level. The additional modal data 270 may be mapped to a node of another level of the scene graph 250. For example, FIG. 2 illustrates an example of the scene graph 250 with nodes of a sub-object level being added to the initial scene graph. The additional modal data 270 (e.g., an X.jpg image or a Y.jpg image) may be mapped to the nodes (e.g., a Book X node or a Book Y node) of the sub-object level. Furthermore, the additional modal data 270 may be mapped to a node of an upper level of the specific level in the scene graph 250.

According to an embodiment, a location where additional modal information is stored may be different from a location where the scene graph 250 is stored. The storage location of each piece of information may be determined based on access frequency and data size. According to an embodiment, the scene graph 250 is represented in a text format (e.g., a JSON format). Thus, the data size of the scene graph 250 may be less than the data size of the additional modal data (visual/audio media data generally being much larger than textual data). As described above, additional modal information may be used when an executable plan is unable to be generated with only nodes of the scene graph 250 (without the additional modal information). Thus, the access frequency to the additional modal data 270 may be less than the access frequency to the scene graph 250 (because the scene graph 250 will usually be accessed to access any additional modal data 270). The access frequency to the additional modal data 270 may be the frequency of accesses to where the additional modal data 270 is stored in a storage, and the access frequency to the scene graph 250 may be the frequency of access to the location where the scene graph 250 is stored in a memory. The storage may have a slower access speed than a memory, but a larger storage space compared to the memory. Accordingly, the electronic device may store the scene graph 250 in the memory (e.g., a random-access memory (RAM)) and the additional modal information associated with a node of the specific level of the scene graph 250 in the storage. Accordingly, a plan may be rapidly inferred while a memory space and a storage space are efficiently used.

For example, the electronic device may further include the storage. The storage may store the additional modal data 270 mapped to a node of the specific level in the scene graph 250. The electronic device may load the additional modal data 270 mapped to a relevant node from the storage when generating a candidate node (e.g., when accessing the relevant node, by dereferencing the relevant node to find the location of the additional modal data 270 in the storage). The electronic device may load the scene graph 250 from the memory (e.g., a dynamic memory) and may generate a task plan by providing the loaded scene graph 250 and a prompt that instructs a task to the machine-learning-based model (e.g., the LLM). If a plan generated based on nodes of the scene graph 250 is not executable or generatable, the electronic device may access the additional modal information of the storage (e.g., a static memory) to generate a new plan based thereon.

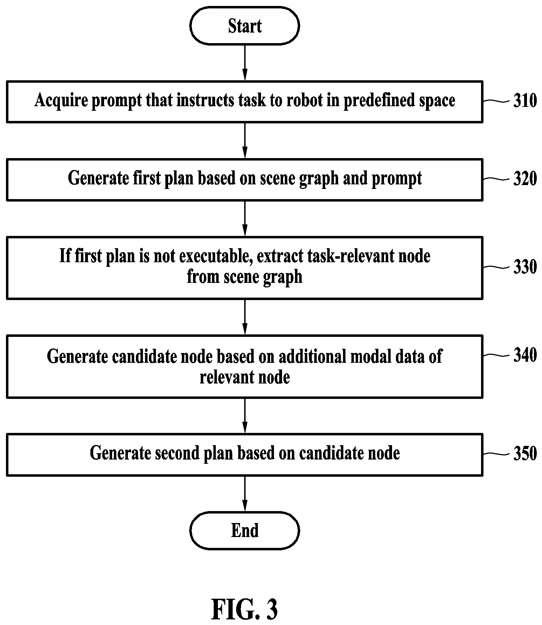

FIG. 3 illustrates an example of a method of generating a task plan according to one or more embodiments. The method of FIG. 3 are performed by an electronic device, mention of which is omitted as presumed.

In operation 310, a prompt (e.g., a textual prompt) is acquired that instructs a task to a robot in a predefined space. The prompt may instruct a task to the robot in the predefined space. For example, an input of a prompt may be received in a natural language from a user through an input interface. The prompt may be acquired based on the user's voice input and/or text input. In response to receiving the voice input from the user, the voice input may be translated into a text input.

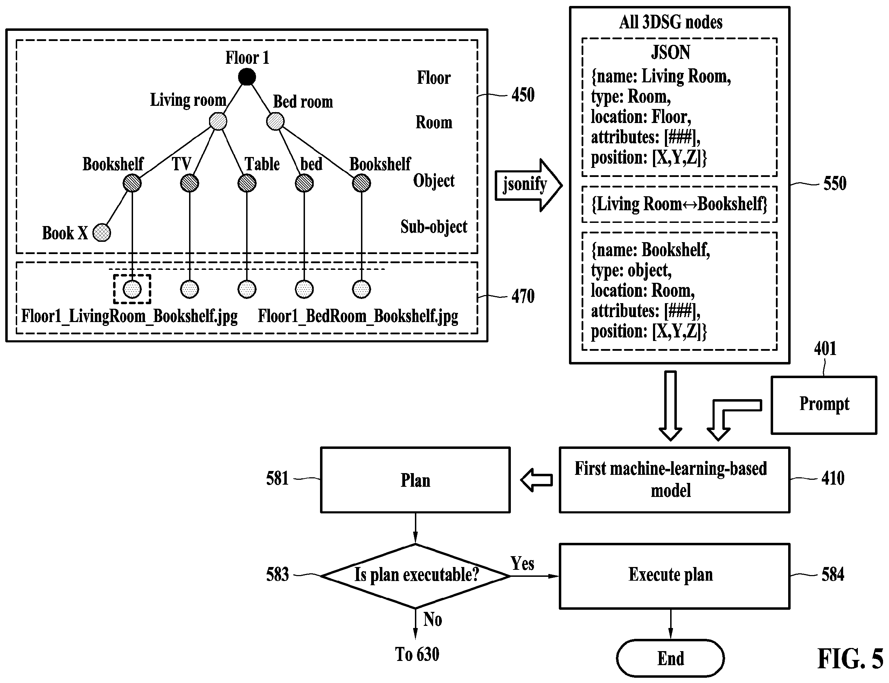

In operation 320, a first task plan is generated based on a scene graph and the prompt. The first task plan may be generated for the robot to perform the input task by providing the scene graph and the prompt to a first machine-learning-based model. For example, the first plan may be generated by inputting the scene graph (e.g., text data in a JSON format that represents nodes and edges) as a serialized representation together with the prompt (e.g., text data in a natural language) acquired in operation 310 as described above to the first machine-learning-based model (e.g., an LLM). The generating of the first plan is described below with reference to FIG. 5.

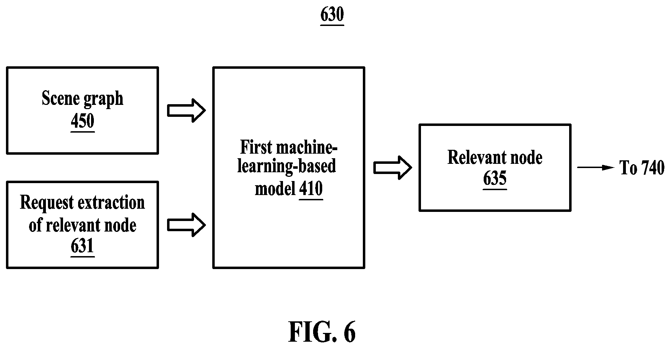

In operation 330, if the first plan is not executable (or cannot be generated to complete the input task), a task-relevant node may be extracted/accessed from the scene graph. The executability/generatability of the first plan may be evaluated, and if not executable, the relevant node may be extracted/accessed by providing the first machine-learning-based model with a request to extract the relevant/access node to the input task from among nodes of the scene graph. The extracting/accessing of the relevant node is described below with reference to FIG. 6.

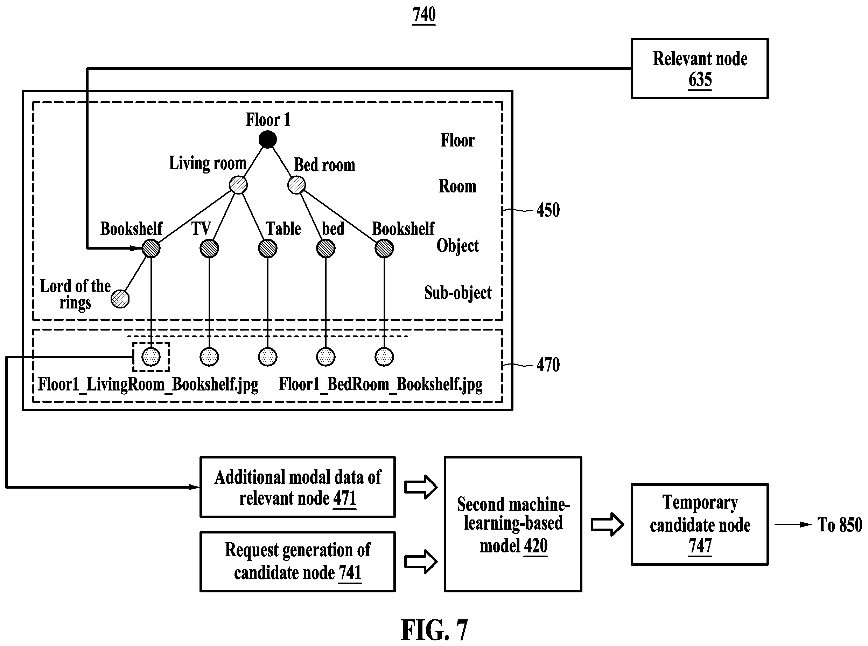

In operation 340, a candidate node may be generated based on additional modal data of the relevant node. A candidate node may be generated that is depends from the relevant node by providing a second machine-learning-based model with the additional modal data of the relevant node and with a prompt relevant to a task (e.g., one for the input task) for the additional modal data. The generating of the candidate node is described below with reference to FIG. 7.

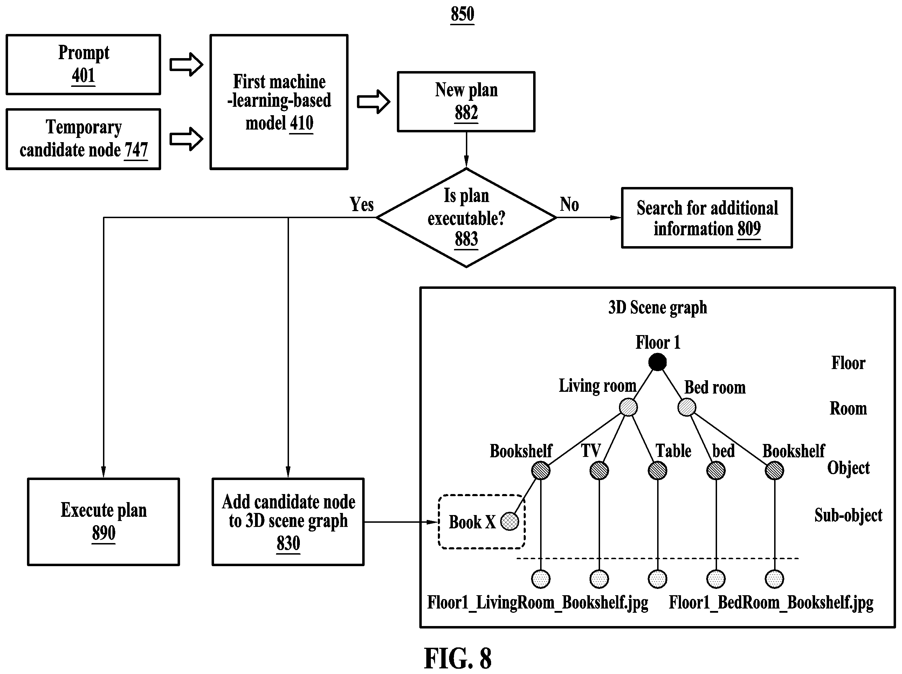

In operation 350, a second task plan may be generated based on the candidate node. The second task plan may be generated for the robot to perform the input task by providing the candidate node and the prompt to the first machine-learning-based model. The generating of the second task plan is described below with reference to FIG. 8.

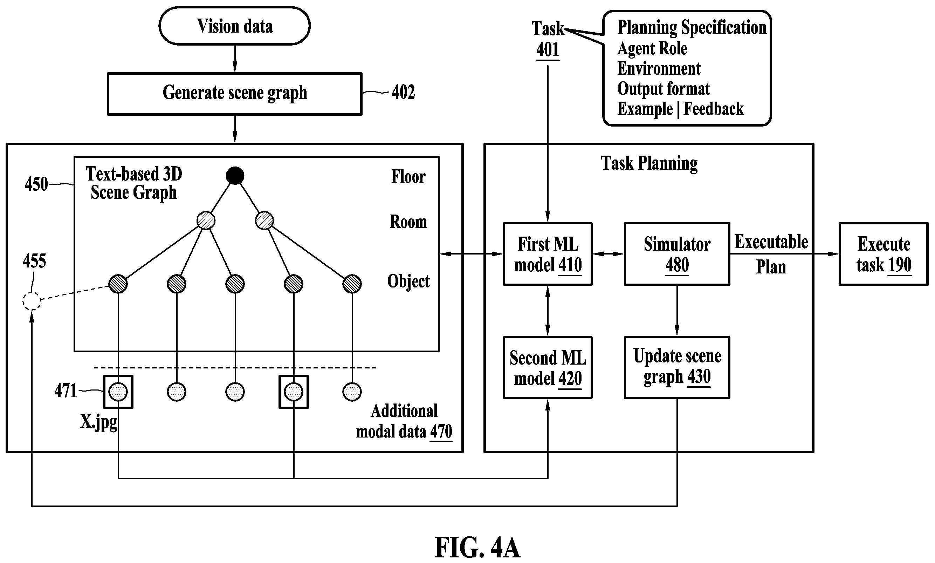

FIG. 4A illustrates an example of generating a task plan to perform an input task by providing a machine-learning-based model with a candidate node prepared by using associated additional modal information and a scene graph, according to one or more embodiments. The operations and components described with reference to FIG. 4A may be by/of an electronic device, e.g., the electronic device 1000 of FIG. 10 or the electronic device 1100 of FIG. 11. The electronic device is assumed with reference to FIG. 4A.

In operation 402, a scene graph 450 may be generated based on vision data. For example, the vision data may be captured by using a vision sensor (e.g., an RGB-D sensor configured to capture a color image and a depth image) at multiple locations while moving in a space to be represented by the scene graph. The vision data may be, for example, data (e.g., RGB-D data) including a color image and a depth image, but examples are not limited thereto. The space may be divided into a hierarchy of areas based on the collected vision data and node respectively corresponding/representing the areas may be generated. Each area may be further divided into one or more sub-areas. For example, The space may be identified as having one or more floors and one or more rooms for each floor based on floors and/or walls. Although the space being divided into a living room and a bedroom on floor 1 is illustrated in FIG. 1 to help understanding, examples are not limited thereto. An individual room may be identified by an anonymous identifier (e.g., room 1 or room 2).

Objects may be identified in the respective divided areas (e.g., each rooms), for example, by performing object detection in each area based on the vision data. The electronic device may generate nodes (e.g., object nodes) respectively corresponding to the detected objects (some areas/nodes (e.g., rooms) may contain more than one object). Edges may be generated that connect the object nodes to the nodes respectively corresponding areas to which they belong. Each edge may include information indicating a positional relationship (e.g., "contains", "on", etc.) between its object and the area to which its object belongs. The scene graph 450 may be generated by hierarchically organizing the nodes and edges. The scene graph 450 may be generated in the form of a serialized representation (e.g., a JSON format). Pieces of additional modal data 470 may be kept and associated with respective node (e.g., object-level nodes) of a specific level in the scene graph 450. As illustrated in FIG. 2, the generated scene graph 450 may be stored separately (e.g., in a memory) from the additional modal information 470 (e.g., in a storage).

For reference, an example of the electronic device generating an initial scene graph is described herein, but examples are not limited thereto. The initial scene graph may be generated in advance (e.g., before a task is input by a user) by a separate device. In addition, although the electronic device collecting pieces of additional information (e.g., the additional modal data 470) to update the scene graph 450 is described below, examples are not limited thereto. The separate device may receive a request to collect the other piece of additional information from the electronic device and may collect the other piece of additional information in response to this collection request. The separate device may be movable independently of the electronic device or may be a search device having sensors configured to collect information by being stationarily deployed in multiple locations in the space.

In some embodiments, the electronic device may receive a prompt (e.g., a natural-language prompt) that instructs a task from the user. The electronic device may generate a task prompt 401 in a specific format (e.g., planning specification) to be input to a machine-learning-based model from the natural-language prompt received from the user. The task prompt 401 may include content required to establish a task plan for task-performing. For example, referring to FIG. 4A, the task prompt 401 may include content corresponding to an agent role, an environment, an output format, an example, and/or feedback. The task prompt 401 may be a textual prompt including content of a text modality, but examples are not limited thereto. The task prompt 401 may be a multi-modal prompt including content of another modality (e.g., at least one modality of an image modality, a video modality, or a voice modality) different from the text modality.

In the task prompt 401, as an example, the agent role may be played by the machine-learning-based model in processing a prompt given to this model. For example, the agent role given to a first machine-learning-based model 410 in FIG. 4A may be a task planner. The environment may be a serialized representation (e.g., a JSON text) of the scene graph 450. The output format of the task plan may be a sequence of actions of an actor (e.g., the robot) defined in a function format. For example, the actions may be expressed by: "goto(Room1)", referring to moving to room 1; "goto(pose1)", referring to taking pose 1; "access(fridge)", referring to accessing a fridge; and "open(fridge)" referring to open the fridge. The output task plan may be expressed by "[goto(Room1), goto(pose1), access(fridge), open(fridge)]" as a sequence of these actions. For another example, the task plan to move to room 1, take pose 1, move to a bookshelf, and take a book may be expressed by "[goto(Room1), goto(pose1), goto(bookshelf), pick(book)]". The example task plan may be outputted based on a corresponding example natural-language prompt and text scene graph. The feedback may include an evaluation result of the executability/generatability of the task plan and may be used to regenerate the task plan or instead generate a temporary candidate node 455 (to be used in generating a new task plan).

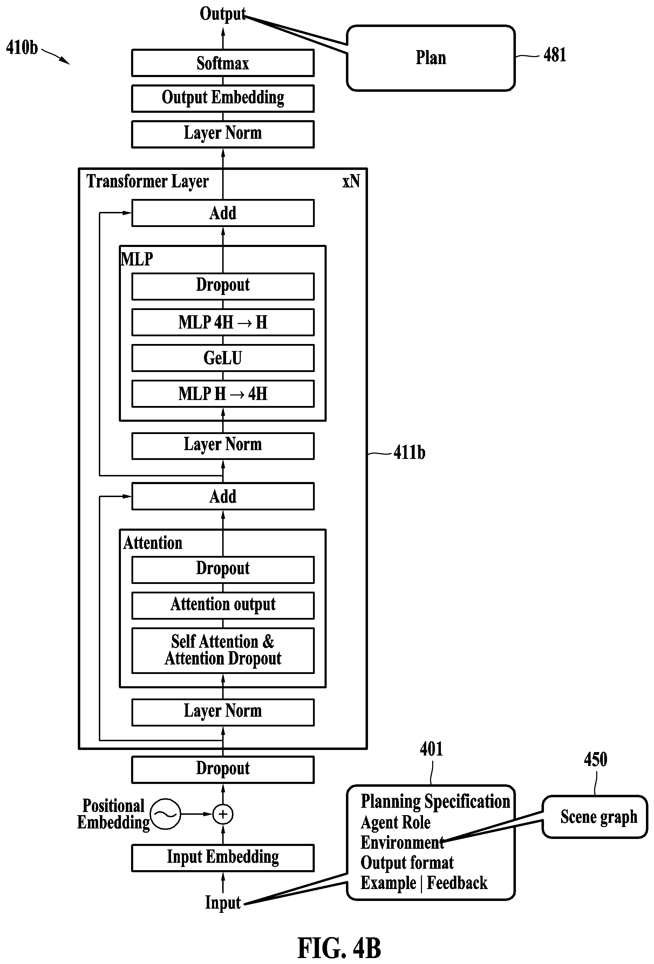

According to an embodiment, the electronic device may generate a task plan as an output by applying the task prompt 401 described above to the first machine-learning-based model 410. For example, the first machine-learning-based model 410 may be a text generation model. As an example of a text generation model, the generating of an output by a transformer-based model is described below with reference to FIG. 4B. The first machine-learning based model 410 may be provided with a serialized representation representing nodes of the scene graph 450. For example, the serialized representation (e.g., the JSON text) of the scene graph 450 in the task prompt 401 described above.

A simulator 480 may evaluate the executability or generatability of a task plan generated by the first machine-learning-based model 410. For example, the simulator 480 may simulate actions of the task plan for the nodes of the scene graph 450. The simulator 480 may determine that the plan is executable if a simulation of each action of the generated plan adheres (or satisfies) the state, accessibility, affordance, and constraints of each node of the scene graph 450. The simulator 480, if the task plan is executable, may generate textual feedback indicating that the task plan is executable (or successful). The textual feedback indicating the success of the plan may be used to determine whether to add the temporary candidate node 455 to be described below to the scene graph 450. Alternatively, a decision to add the temporary candidate node 455 may be based on a failure of the first machine-learning-based model 410 to generate a task plan.

However, the simulator 480 may instead determine that the task plan is not executable if a simulation of each action of the generated plan does not adhere (or does not satisfy) the state, accessibility, affordance, and constraints of each node of the scene graph 450. For example, the simulator 480 may simulate a state change of an object in the space or the movement of the actor (e.g., the robot) in the space corresponding to a scene according to the actions of the generated task plan. The simulator 480 may determine that the task plan is not executable, for example, if an action that attempts to pick a book according to a plan is simulated while a door of a bookshelf is closed. The simulator 480 may generate textual feedback (e.g., cannot pick the book) indicating that the task plan is not executable (or failed). The textual feedback indicating the failure may be integrated as feedback in the prompt format described above and may be used to generate a modified plan.

For example, the simulator 480 may be implemented by the first machine-learning-based model 410. The electronic device may cause the first machine-learning-based model 410 to generate a text output indicating a verification result of a task plan as the simulator 480 by applying a prompt including the text "simulator" indicating the agent role and text requesting the verification of the generated task plan to the first machine-learning-based model 410. For example, if the text requesting the verification of the task plan is "verify whether this task plan is executable by simulating the plan of [goto(Room1), goto(pose1), goto(bookshelf), grip(book)] at each step in the given scene graph 450", and the door of the bookshelf is closed in the scene graph 450, the first machine-learning-based model 410 may generate the verification result text like "Plan failed: cannot pick the book." This should be understood as just an example. In addition, the simulator 480 is not limited to the foregoing examples and may be implemented as a program configured to generate a simulation result by receiving the scene graph 450 and a task plan.

If a task plan is found to be executable after the simulator 480 has simulated execution of the task plan generated by the LLM (or a large multi-modal model (LMM)), the electronic device may perform operations according to the task plan in operation 190. However, examples are not limited to the foregoing examples, and the simulator 480 may be omitted. Without any simulator, the electronic device may execute, in operation 190, the task plan generated based on the first machine-learning-based model 410. The electronic device may perform the generated task plan through the actor (e.g., the robot) without verification and may acquire feedback (e.g., textual feedback) indicating whether the performing result is successful or failed.

Whether non-executability of a task plan is determined from simulation or actual execution thereof, the electronic device may dynamically add a node to the scene graph 450 according to the executability of the task plan.

For example, if the task plan is not executable (or the task plan failed), the electronic device may perform a node management operation (e.g., the update of the scene graph 450 in operation 430) to generate a new task plan. For example, the electronic device may acquire failure feedback (e.g., textual feedback indicating the non-executability from the simulator 480 or the textual feedback indicating the execution in the robot has been failed) about the task plan. Additional information may be acquired to be used to generate the new task plan (e.g., a second task plan) if the task plan based on the existing scene graph 450 has failed. The electronic device may temporarily generate an additional node (e.g., a task-adaptive node) including information required for the input task.

If a first plan is not executable, the candidate node 455 (about the additional information) may be generated by using the additional modal data 470 (e.g., an image capturing an object) of the object having relevancy (e.g., high relevancy) with the input task. For example, nodes relevant to the task may be extracted from the scene graph 450. A relevant node (e.g., a node having the highest relevancy with the given task in the scene graph 450) may be extracted by applying the failure feedback together with a prompt requesting the extraction of relevant node(s) to the first machine-learning-based model 410. The temporary candidate node 455 (or a candidate node group including multiple candidate nodes) may be generated based on the additional modal data 470 of the relevant node. The electronic device may generate the temporary candidate node 455 based on providing the additional modal data 470 (e.g., an image X.jpg 471 about a node X) to a second machine-learning-based model 420. The extraction of the relevant node is described with reference to FIG. 6 and the generation of the candidate node 455 in FIG. 7.

The electronic device may generate the second task plan by applying the candidate node 455 and the existing nodes of the scene graph 450 together with the task prompt 401 to the first machine-learning-based model 410. The electronic device may verify the executability of the new second task plan based on the simulator 480 (or otherwise, as described above with respect to the first task plan).

In operation 430, the scene graph 450 may be updated based on the temporary candidate node 455. For example, the updated scene graph may be acquired by adding a node to the scene graph 450 if a plan based on the temporarily generated node is successful. The updated scene graph may be used for a subsequent input task. The electronic device may add a successful candidate node to a scene graph as a separate operation without using the first machine-learning based model 410. However, examples are not limited to the foregoing examples. The updated scene graph may be generated by applying a candidate node together with a role as a scene graph manager to the first machine-learning-based model 410 if a task plan based on the candidate node is successful.

The electronic device, if the second plan generated based on the temporary candidate node 455 is not executable/generatable, may maintain the existing scene graph 450, i.e., may not add the temporary candidate node 455 to the scene graph 450. As described below, the electronic device may perform exploration to collect another piece of additional information (e.g., new information).

The format of a prompt input to the first machine-learning-based model 410 is described above, and a prompt in similar format may be provided to the second machine-learning-based model 420. The second machine-learning-based model 420 may be, for example, a transformer-based LMM designed to generate a text output from a multi-modal prompt. The agent role given to the second machine-learning-based model 420 may be to generate a node of the scene graph 450.

FIG. 4B illustrates an example of a structure of an LLM based on a transformer as a machine-learning-based model according to one or more embodiments.

In some embodiments, a first machine-learning-based model (e.g., the first machine-learning-based model 410 of FIG. 4A) and a second machine-learning-based model (e.g., the second machine-learning-based model 420 of FIG. 4A) may be transformer-based models. A transformer-based model may be a neural network model (hereinafter, a "transformer model 410b") including a transformer layer 411b. The transformer model 410b having many input parameters may be referred to as an LLM or an LMM. For example, the LLM may be a model that processes the input and output of a text modality. For another example, the LMM may be a model that processes inputs and outputs of various modalities including text type.

For example, input data may be tokenized in the transformer model 410b. In the example illustrated in FIG. 4B, the input data may be the task prompt 401 including the scene graph 450 as illustrated in FIG. 4A. If the input data is text, the input text may be tokenized to a word, a phrase, or another semantic unit. As the tokenized result of the input data, a sequence (e.g., a token sequence) of input tokens may be generated. Each token of the tokenized input may be translated into an embedding vector (e.g., an input embedding). Positional embedding corresponding to the location of the token in the token sequence may be applied to each input embedding. The positional embedding and input embedding for each token may be transmitted to the transformer layer 411b via a drop-out layer.

The data (e.g., positional embeddings and input embeddings in the token sequence) input to the transformer layer 411b may pass through an attention layer and a multi-layer perceptron layer.

In the attention layer, a contextualized representation based on a relationship between each token and the other tokens may be generated after going through self-attention, attention drop-out, attention output, and drop-out. This contextualized representation may be output from the attention layer. The result of adding an input to the attention layer to an output from the attention layer according to a residual connection may be input to the multi-layer perceptron layer.

In the multi-layer perceptron, a richer representation may be generated after passing through a normalization layer, a dimension expansion layer (e.g., an MLP H -> 4H layer that expands a dimension four times), an activation function layer (e.g., a Gaussian error linear unit (GeLU)), a dimension collapsing layer (e.g., an MLP 4H ->H layer that collapses the dimension 1/4 times), and a drop-out layer. The result of adding an input to the multi-layer perceptron layer to an output from the multi-layer perceptron layer may be propagated to the next normalization layer (layer norm).

Although one transformer layer 411b is illustrated in FIG. 4B for concise description, multiple transformer layers 411b may be stacked. If the transformer model 410b includes transformer layers 411b, an output from a random transformer layer 411b may be propagated to the next transformer layer 411b.

A result (e.g., a result of iteratively applying an operation based on the plurality of transformer layers 411b) output from the last multi-layer perceptron layer may pass through the normalization layer and may be translated into an output embedding. A logic value of each token of vocabulary of the transformer model 410b may be calculated in the output embedding. A probability distribution of tokens of the vocabulary of the transformer model 410b may be calculated for the token sequence through a SoftMax layer. The electronic device may generate a token to be output after given input data (e.g., an input sequence corresponding to the task prompt 401) based on the probability distribution. For example, the electronic device may generate a token having the highest probability from the vocabulary. A series of tokens generated through an operation based on the transformer layer 411b may represent a text corresponding to a task plan 481. Accordingly, the electronic device may generate the task plan 481 by applying the input data to the transformer model 410b.

Although the example of the text being tokenized is mainly described above, examples are not limited thereto. For example, in the LMM configured to process image data, a token that is tokenized from a patch of the image data or a token that is tokenized from a visual feature (e.g., the visual feature extracted based on a neural network having a convolution layer) extracted from the image data may be input or output. The token (e.g., an image token) tokenized from the image data together with a token (e.g., a text token) of another modality may be input to the transformer model 410b or output from the transformer model 410b.

In addition, although FIG. 4B illustrates the example of the plan 481 being generated from the task prompt 401, examples are not limited thereto. A first machine-learning-based model and a second machine-learning-based model, which are implemented as the transformer model 410b, may output a simulation result of a plan to be described below, an extraction result of a relevant node, a generation result of a temporary candidate node, and an update result of a scene graph according to their given agent roles and prompts.

FIG. 5 illustrates an example of generating a first task plan using a machine-learning-based model and a scene graph according to one or more embodiments. The components/operations of FIG. 5 may be assumed to be performed by one or more electronic devices, as described elsewhere herein.

According to some embodiments, a first task plan may be generated based on the machine-learning-based model (e.g., an LLM) from a given scene graph (e.g., an initial scene graph) and a prompt input from a user. For example, a task plan 581 (e.g., a first task plan) may be generated by applying the scene graph 450 together with the task prompt 401 to the first machine-learning-based model 410. The scene graph 450 is an exemplary serialized representation and may be input to the first machine-learning-based model 410 as JSON data 550. In the JSON data 550, each node may be uniquely distinguished and may have a unique name and/or a universally unique identifier (UUID). The JSON data 550 illustrated as an example in FIG. 5 may include "{name: Living Room, type: Room, location: Floor, attributes: [###], position: [X,Y,Z]}" as a node for a living room and "{name: Bookshelf, type: object, location: Room, attributes: [###], position: [X,Y,Z]}" as a node for a bookshelf.

A relationship (e.g., a spatial relationship) between nodes in the JSON data 550 may be represented by an edge or an inclusion/containment relation. The inclusion/containment relation in the JSON data 550 may have a nested dictionary format (indicating the presence of objects inside a room or the like) or a list of unique identifiers for the objects belonging to the room. The edge may be a connection between two nodes and the edge itself may have a unique identifier. The example of the relationship between nodes being represented by the edge is mainly described herein. For example, the JSON data 550 illustrated as an example in FIG. 5 may include "{Living Room <-> Bookshelf}" as an edge between the living room and the bookshelf. However, the JSON data 550 illustrated as an example in FIG. 5 is to help with the understanding, and the configuration of JSON data is not limited thereto. Content included in the JSON data may vary depending on designs and spaces delt with by the scene graph.

In operation 583, the electronic device may verify the executability of the task plan 581. For example, as illustrated above in FIG. 4A, the electronic device may determine whether a first task plan is executable based on simulation on the first task plan. In operation 584, if the first task plan is executable, the electronic device may perform operations according to the first task plan. However, the first task plan may not be executable.

Information (e.g., information of nodes belonging to a range from the uppermost level to a specific level) covered by the scene graph as-is may not be sufficient to generate a task plan that a robot may perform to accomplish the input task. For example, a node of the specific level (e.g., the lowermost level) of the scene graph may include information on the bookshelf (e.g., the location of the bookshelf) but may not include information on which books are arranged in the bookshelf. If an input task directed to a certain book among the books in the bookshelf is requested, the initial scene graph does not include information on an individual book, and thus, a task executable to perform the input task may not be generated from the initial scene graph.

If the first task plan is not executable, the generation of a new task plan (e.g., a second task plan) may be attempted. New information may be acquired/accessed to generate the new plan. As described above, since an executable plan has not been generated from information in the range covered by the scene graph, additional information (e.g., more detailed information) may be acquired/accessed from outside the range covered by the initial scene graph. The additional information may be information of a concept belonging to a different level (e.g., a lower level than the specific level). Additional information about an object may include, for example, information on sub-objects that are further broken down from the object. For example, if the object is the "bookshelf", the sub-objects may be the "books" arranged in the bookshelf. If the object is a "fridge", the sub-objects may be "foods" inside the fridge. If the object is a "complex machine", the sub-objects may be "control buttons" used to manipulate the machine. The extracting (e.g., operation 630 of FIG. 6) of a relevant node is described below with reference to FIG. 7.

FIG. 6 illustrates an example of extracting a node relevant to a task from a scene graph according to one or more embodiments.

In operation 630, an electronic device may extract a relevant node 635 to be used to generate a temporary candidate node. For example, if a first task plan is determined to be not executable, the electronic device may extract a node (e.g., the relevant node 635) having relevancy with a task among nodes of the scene graph. The relevant node 635 may be extracted from among nodes belonging to a specific level (e.g., an object-level). However, examples are not limited thereto, the relevant node 635 may be extracted from among nodes of another level of the scene graph.

The electronic device may extract the relevant node 635 by applying the scene graph 450 together with an instruct prompt 631 requesting the extraction of the relevant node to the first machine-learning-based model 410. The instruct prompt 631 requesting the extraction of the relevant node may include, for example, text that instructs the presentation of a node having the highest relevancy to a given task from among the nodes of the scene graph 450. The electronic device may assign an agent role in extracting a node to the first machine-learning-based model 410.

However, the extraction of the relevant node 635 is not limited to the foregoing examples. The electronic device may calculate relevancy scores of nodes of the scene graph with respect to a task. For example, the electronic device may calculate, as relevancy scores, similarities (e.g., cosine similarities) between an embedding vector corresponding to a task prompt and embedding vectors respectively corresponding to the nodes of the scene graph. For another example, as relevancy scores, similarities (e.g., a matching scores) may be calculated between (i) a token, a word, or a phrase included in the task prompt and (ii) text contents of the respective nodes. The specific number (e.g., one or more) of nodes may be selected in order from the node having the highest relevancy score among the nodes of the scene graph as the relevant node(s) 635 (e.g., the nodes with the top-N relevancy scores may be selected).

After extracting the relevant node(s) 635, the temporary candidate node(s) may be generated according to operation 750.

FIG. 7 illustrates an example of generating a candidate node that may be connected to a relevant node by using additional modal information associated with a scene graph according to one or more embodiments.

The electronic device may generate a temporary candidate node to be used to generate a second task plan based on a second machine-learning-based model (e.g., an LMM) from among the extracted relevant nodes. The electronic device may load the additional modal data 471 (e.g., an image of a bookshelf in a living room) mapped to the relevant node 635 (e.g., a bookshelf node in the scene graph 450 of FIG. 7) screened from the additional modal data 470. For example, the relevant node 635 may be Floor1 - Living Room - Bookshelf node, Floor1 - Bed Room - Bookshelf node, and Floor1 - Living Room - Table node. The electronic device may generate a temporary candidate node 747 by applying an instruct prompt 741 requesting the generation of a candidate node together with the additional modal data 471 of the relevant node to the second machine-learning-based model 420. The instruct prompt 741 requesting the generation of a candidate node may be, for example, "find a book X in a given image and generate a node for the book X".

The electronic device may screen (select) a candidate node required for successful task performance from among one or more temporary candidate nodes and may add the screened/selected candidate node to the scene graph. The candidate node may be added to, for example, a lower level (e.g., a sub-object-level) than the specific level (e.g., the object-level) in the scene graph. The candidate node may be added to the scene graph as a dependent/child node of the relevant node used to generate the candidate node. However, examples are not limited thereto. The candidate node may be placed at a different level other than the sub-object-level in the scene graph, and an edge that connects the candidate node to another node instead of the relevant node may be added to the scene graph.

Although the example of mapping a piece of additional modal data to each relevant node and generating one temporary candidate node from the piece of additional modal data is mainly described herein, examples are not limited thereto.

Additional modal data may be mapped to some relevant nodes among a set of relevant nodes. The electronic device may exclude the relevant nodes without the mapped additional modal data from the generation of a candidate node. For example, the electronic device may initially extract N relevant nodes for an input task and m relevant nodes among the N relevant nodes may not have additional modal data. Here, "N" may be an integer greater than or equal to 2, and "m" may be an integer greater than or equal to 1 and less than or equal to N. For example, the electronic device may attempt the generation of a candidate node for the remaining N-m relevant nodes, excluding the m relevant nodes without the additional modal data.

In addition, pieces of additional modal data may be mapped to relevant nodes. Pieces of visual information (e.g., image data) or pieces of auditory information (e.g., sound data) may be mapped to a relevant node. Furthermore, one or more pieces of visual information and one or more pieces of auditory information may be mapped to a relevant node. Although the example of mapping single data to each modality is described herein, examples are not limited thereto. For example, video data including both visual information and auditory information, as additional modal data, may be mapped to a relevant node.

For example, a relevant node may indicate a showcase accommodating various dolls, additional modal data for this relevant node may include at least one of image data (e.g., a photo) capturing the showcase, a video for the showcase, or sound data recording sound generated from the showcase. If a prompt is "Bring a doll singing a song W" and an initial plan (e.g., a first plan) fails, the electronic device may generate a candidate node for the 'doll singing the song W' from the additional modal data (e.g., the image, the video, and the sound data) for the showcase.

Candidate nodes may be generated from additional modal data mapped to a relevant node. For example, a prompt may be "Bring a book X", and a book X may include a book X1, a book X2, and a book X3. The electronic device may generate a first candidate node indicating the "book X1", a second candidate node indicating the "book X2", and a third candidate node indicating the "book X3" from a "bookshelf" image mapped to a "bookshelf" node as a relevant node of the object-level.

In addition, the electronic device may extract candidate nodes of multiple levels together. For example, the electronic device may extract a "book series X" dependent from the "bookshelf" node and a "book X1" node, a "book X2" node, and a "book X3" node dependent from the "book series X" for the "bookshelf" node of the scene graph from the single instruct prompt 741 requesting the generation of a candidate node.

The electronic device may generate a candidate node including the attribute information of a target object if a prompt includes an indication of the attribute of the target object in a task. For example, if a task prompt is "Bring a thick book", the instruct prompt 741 requesting the generation of a candidate node may be "Generate a node for the thick book", the generated temporary candidate node 747 may include 'thickness' as an attribute. The attribute of the target object may include, for example, the color, size, thickness, length, and shape (e.g., square) of the target object.

In addition, the electronic device may determine whether to generate a temporary candidate node for a relevant node based on the generation time of generating additional modal data mapped to each relevant node. For example, the electronic device may exclude the use of the additional modal data from the generation of a candidate node if a task command time is past a threshold valid time from the acquisition time of the additional model data. For another example, the electronic device may record and manage the acquisition time for each piece of additional modal data. The electronic device may generate a temporary candidate node by preferentially using additional modal data acquired at a time that is adjacent to the task command time. The electronic device, when generating temporary candidate nodes, may simulate or perform a plan generated by using a candidate node based on the additional modal data (e.g., the latest modal data) acquired at a time that is adjacent to the task command time before another plan.

The electronic device may generate a second task plan by using the information of a temporary candidate node generated in operation 850 described below with reference to FIG. 8.

FIG. 8 illustrates an example of generating a second task plan using a machine-learning-based model from a scene graph, a candidate node, and a prompt, according to one or more embodiments. An electronic performs the operations of FIG. 8.

In operation 850, a new task plan 882 (e.g., a second task plan) may be generated. For example, the new task plan 882 may be generated by applying the task prompt 401 together with the generated temporary candidate node (described above with reference to FIG. 7) to a first machine-learning-based model. The temporary candidate node may be added together with an existing scene graph.

In operation 883, it may be determined whether the second task plan is executable.

In operation 830, a candidate node may be added to a 3D scene graph. If a task based on the second task plan is executable (or generatable), the candidate node may be inserted into the scene graph. In operation 890, if the second task plan is determined to be executable, a robot may be instructed to perform operations according to the second plan.

In operation 809, additional information may be searched for. For example, if the second task plan is not executable/generatable, the robot may be instructed to search for and collect another piece of additional information. This may indicate that the used information is still insufficient to successfully perform the input task. For example, if a prompt of the input task is "Bring a book X", the scene graph did not include a node for the book X (the book X may have not been captured in an image, which was additional modal data). In this case, the task may not be successfully performed with only the given/initial scene graph and additional modal data. Accordingly, an image capturing the book X in a space may need to be collected as the additional modal data. The electronic device may update the additional modal data (e.g., the image capturing the book X) associated with the scene graph, based on a result of the search. The electronic device may collect another additional information for each node of the scene graph through a sensor (e.g., a vision sensor) by moving to explore the space corresponding to a scene. In addition, the electronic device may visit an object or location corresponding to the relevant node 635 described above with reference to FIG. 6 to collect yet another additional information. Alternatively, the electronic device may, as needed, obtain additional information from a network service (e.g., on that supplies images for queried locations), a peer electronic device, or the like.

The electronic device may perform exploration to periodically collect additional information. Accordingly, the additional modal data in the scene graph may be kept current.

As described above with reference to FIG. 7, relevant nodes may be extracted for a task. A candidate node may be generated based on additional modal data of each of the relevant nodes. If the candidate nodes are generated, the electronic device may screen/select at least one candidate node from among the candidate nodes. A new plan may be generated based on the screened/selected candidate node and the new plan may be applied to the update of the scene graph. For example, if the task is "Bring something to eat", there may be multiple target objects (e.g., banana, cereal, and cake) for the task. The electronic device may screen/select an optimal candidate node to perform the task. For example, the electronic device may select some candidate nodes depending on a user preference. The electronic device may select a candidate node for "banana" selected depending on the user preference from among "banana", "cereal", and "cake" and establish and generate/perform a task plan based thereon.

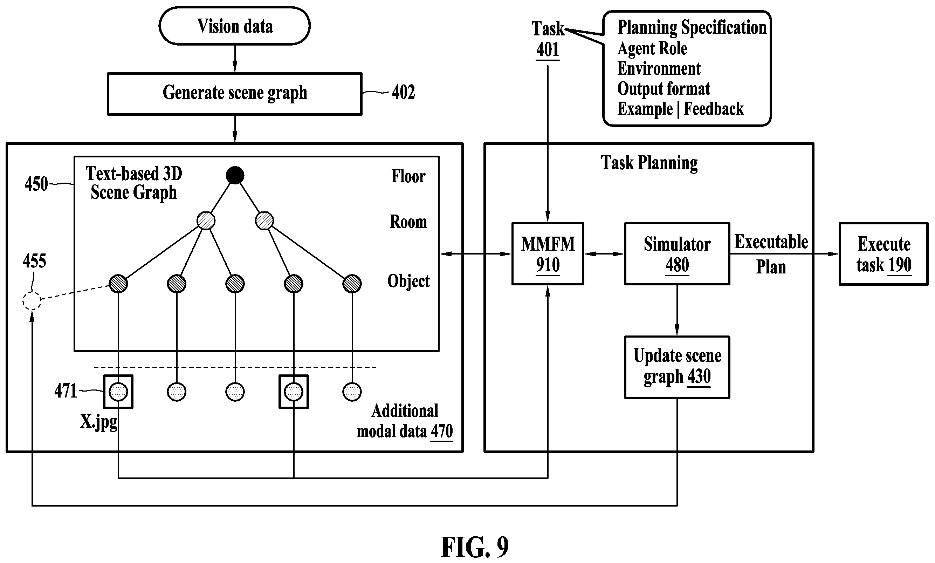

FIG. 9 illustrates an example of generating a candidate node and a plan by using a multi-modal foundation model (MMFM), according to one or more embodiments.

In some embodiments, a first machine-learning-based model and a second machine-learning-based model may be the same multi-modal generation model. The multi-modal generation model may be, for example, an MMFM 910. FIG. 9 illustrates an example of the first machine-learning-based model and the second machine-learning-based model that are illustrated in FIG. 4A being integrated into the MMFM.

The MMFM 910 may be a general-purpose AI model configured and trained to process various data modalities. An input and output of the MMFM 910 may have, for example, any one of or a combination of two or more of a text modality, an image modality, a video modality, and an audio modality. Data having a single modality may be referred to as unimodal data and data having multiple modalities may be referred to as multi-modal data.

In an example, the MMFM 910 may generate a unimodal output (e.g., a text output) from a unimodal input (e.g., an image input). In another example, the MMFM 910 may generate a multi-modal output (e.g., an output with an image and a text being combined) from the unimodal input (e.g., a text input). In yet another example, the MMFM 910 may generate the multi-modal output from a multi-modal input. As described above, in the MMFM 910, a modality of the input may be different from a modality of the output. However, examples are not limited thereto, and, in a random MMFM 910, the modalities of the multi-modal input and the multi-modal output may be the same. For example, the MMFM 910 may generate an output with a text and an image being combined from an input with a text and an image being combined.

The electronic device may assign a role corresponding to each generation operation to the MMFM 910. For example, the electronic device may generate a task plan (e.g., a first task plan and a second task plan) by applying a corresponding prompt together with a planner role to the MMFM 910 in the operations described with reference to FIGS. 5 and 9. The electronic device may generate a simulation result by applying a corresponding prompt together with a simulator role to the MMFM 910. The electronic device may generate an extraction result of a relevant node by applying a corresponding prompt together with a role of extracting the relevant node to the MMFM 910 in the operations described with reference to FIG. 6. The electronic device may generate a temporary candidate node by applying a corresponding prompt together with a role of generating a candidate node and additional modal data to the MMFM 910 in the operations described with reference to FIG. 7. In addition, the electronic device may generate an updated scene graph by applying a candidate node together with a role as a scene graph manager to the MMFM 910 if a task plan based on the candidate node is successful.

The remaining operations are the same as or similar to the operations described above with reference to FIGS. 4A to 8.

FIG. 10 illustrates an example of an electronic device according to one or more embodiments.

In some embodiments, the electronic device is incorporated with a robot.

The electronic device may include a processor 1010, a memory 1020, an input interface 1030, a vision sensor 1040, a driving unit 1050, and a manipulator 1060.

The processor 1010 may execute operations according to commands stored in the memory 1020. For example, the processor 1010 may acquire a prompt that instructs a task to a robot in a predefined space. The processor 1010 may generate a first plan for the robot to perform the task by providing a scene graph 1025 and the prompt to a first machine-learning-based model. If the first plan is not executable, the processor 1010 may extract a relevant node by providing the first machine-learning-based model with a request to extract the relevant node to the task from among nodes of the scene graph 1025. The processor 1010 may generate a candidate node that is dependent on the relevant node by providing a second machine-learning-based model with the additional modal data of the relevant node and a prompt relevant to a task for the additional modal data. The processor 1010 may generate a second plan for the robot to perform the task by providing the candidate node and the prompt to the first machine-learning-based model.

However, examples are not limited thereto, and the processor 1010 may perform the operations described above with reference to FIGS. 1 to 9 simultaneously or in parallel. In addition, the operations described above with reference to FIGS. 1 to 9 are not limited to be performed according to the described sequence but may be performed in another sequence unless contrary to the description. Some of the operations described above may be omitted or additional operations may be performed.

The memory 1020 may store a machine-learning-based model 1021, the scene graph 1025, and an additional modal database 1027. The additional modal database 1027 may include additional modal data (e.g., an image) associated with at least one node of the scene graph 1025. Although FIG. 10 illustrates that the locations where the additional modal database 1027 and the scene graph 1025 are stored are not distinguished, but examples are not limited thereto. The additional modal database 1027 may be stored in a static memory (e.g., a storage) and the scene graph 1025 may be stored in a dynamic memory. The machine-learning-based model 1021 may include a first machine-learning-based model as a text generation model and a second machine-learning-based model as a multi-modal generation model. However, examples are not limited thereto, and the machine-learning-based model 1021 may be implemented as an integrated MMFM.

The input interface 1030 may receive a prompt input from a user. For example, the input interface 1030 may include at least one of a keyboard, a pointing device (e.g., a mouse, a trackball, a touchpad, or a touchscreen), a microphone, a camera, a sensor (e.g., a touch sensor), or another input device (e.g., a joystick, a gamepad, an antenna, or a scanner). The input interface 1030 may receive at least one of an input text, touch, voice, motion, computer vision, gesture, or other types of inputs. An input device may be a separate type (e.g., a connectable mouse or keyboard) or an integrated part (e.g., a touchscreen or an embedded microphone) with the electronic device. The input interface 1030 may include at least one of a command line interface, a graphical user interface (GUI), a voice command interface, or another user interface (UI). For example, if the input interface 1030 receives a prompt (e.g., a prompt input as voice) of a modality other than a text, the processor 1010 may translate the prompt of the other modality into a textual prompt.

The vision sensor 1040 may visually capture the surrounding environment (e.g., a scene) of the electronic device. For example, the vision sensor 1040 may include a camera sensor and/or a depth sensor. The camera sensor may generate image data by capturing the scene. The depth sensor may generate depth data by capturing the scene. The vision sensor 1040 may generate RGB-D data if the camera sensor is integrated with the depth sensor. However, the sensors of the electronic device are not limited to the foregoing examples. The electronic device may include at least one of a radar sensor, a lidar sensor, an ultrasonic sensor, an infrared sensor, or a sound sensor in addition to the vision sensor 1040. The data of each sensor for a node may be associated with the node of the scene graph 1025 as additional modal data.

The driving unit 1050 may move the electronic device. For example, the driving unit 1050 may include a motor and wheels. The electronic device may move to a location according to a plan through the driving unit 1050. However, the driving unit 1050 is not limited to the description above and may include multi-joint legs including multiple links and joints, a mechanical structure relaying power to each leg, and a motor providing the power.

The manipulator 1060 is a mechanical structure that performs a physical task and may be a structure including links and joints. A link may refer to a structure that connects joints. The manipulator 1060 may perform a specific task (e.g., grabbing an object, moving, or assembling). An angle and location of each joint of a robot arm, which is a type of manipulator 1060 equipped with a robot, may be controlled such that an end portion of the robot arm may reach a target location.

According to an embodiment, the electronic device may perform a task by controlling the driving unit 1050 and the manipulator 1060 according to the generated first plan or second plan. The electronic device may generate and use the scene graph 1025 ontology-free and may perform an open-vocabulary task. With the additional modal information being associated with the scene graph 1025, the electronic device may perform a task with further expanded information.

As described above, the additional modal information may include an image corresponding to an object corresponding to a node, a point cloud, or the user's additional explanation (e.g., text or audio). Since the additional modal information having been associated with the scene graph 1025, the electronic device may add a node or attributes to the scene graph in a task-adaptive manner without physical movement. Accordingly, the electronic device may process task prompts, like "Bring the thickest book among books on the table," or "Put flowers in a yellow vase among vases in the living room". In other words, the electronic device may selectively add attributes through an associated image without physical movement if the attributes, such as the thickness and color of an object, are needed. Accordingly, the electronic device may use plentiful information while using a light scene graph 1025. Accordingly, the electronic device does not need to pre-define a node or attributes of various, detailed levels in preparation for situations with a low probability. The electronic device may use minimum requirements as an input to an LLM while taking the scene graph 1025 in rough division units.

FIG. 11 illustrates an example of a planning system according to one or more embodiments.

A planning system 1100 may include an electronic device and a robot 1120. The planning system 1100 may further include a user terminal 1130. The electronic device may be implemented as a server 1110 of the planning system 1100. For example, the descriptions of a memory 1112 of the server 1110, a processor 1111, a machine-learning-based model 1112-1, a scene graph 1112-5, and an additional modal database 1112-7 stored in a memory 1112, a vision sensor 1124 of the robot 1120, a driving unit 1125, and a manipulator 1126 are the same as the descriptions of the memory 1020, the processor 1010, the machine-learning-based model 1021, the scene graph 1025, the additional modal database 1027, the vision sensor 1040, the driving unit 1050, and the manipulator 1060. Thus, the repeated descriptions are omitted.

The server 1110, if receiving a prompt from a user, may generate a plan according to the operations described with reference to FIGS. 1 to 9 or manage an update of the scene graph 1112-5. The server 1110 may receive a task prompt input through, for example, the user terminal 1130 (e.g., a mobile terminal) or the input interface 1123 of the robot 1120. The server 1110 may provide the generated plan to the robot 1120 via a communication circuit 1117 in response to the received task prompt.

The robot 1120 may perform a task according to the received plan (or the sequence of behaviors of the robot 1120, translated from the plan) via the communication circuit 1127 from the server 1110. As described above with reference to FIG. 10, the processor 1121 of the robot 1120 may perform a task by controlling the driving unit 1125 and the manipulator 1126 according to the plan.

For reference, although FIG. 11 illustrates that the memory 1112 of the server 1110 storing the machine-learning-based model 1112-1, the scene graph 1112-5, and the additional modal database 1112-7, embodiments are not limited thereto. The machine-learning-based model 1112-1, the scene graph 1112-5, and the additional modal database 1112-7 may be distributed and stored on the server 1110, the robot 1120, and the user terminal 1130.

For example, the server 1110 may store the machine-learning-based model 1112-1, and the robot 1120 may store the scene graph 1112-5 and the additional modal database 1112-7. In this case, the server 1110, if failing to generate an executable plan, may request additional modal data from the robot 1120. The robot 1120 may provide the additional modal data to the server 1110 and may request the generation of a temporary candidate node based on the additional modal data from the server 1110. The server 1110 may generate a temporary candidate node by using the machine-learning-based model 1112-1. The server 1110, if a plan based on the generated temporary candidate node is executable, may return the temporary candidate node to the robot 1120. The robot 1120 may add a candidate node to the scene graph 1112-5.

For another example, the server 1110 may store the machine-learning-based model 1112-1, the user terminal 1130 may store the additional modal database 1112-5, and the robot 1120 may store the scene graph 1112-5. In this case, the server 1110, if failing to generate an executable plan, may request additional modal data from the user terminal 1130. The server 1110 may generate a new plan based on the additional modal data received from the user terminal 1130 and may provide the new plan and a candidate node to the robot 1120.

The computing apparatuses, the robots, the electronic devices, the processors, the memories, the image sensors, the displays, the information output system and hardware, the storage devices, and other apparatuses, devices, units, modules, and components described herein with respect to FIGS. 1-11 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-11 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

Therefore, in addition to the above disclosure, the scope of the disclosure may also be defined by the claims, and all variations within the scope of the claims are to be construed as being included in the disclosure.
For instance, the scope includes a method performed by a computing device, the method comprising: accessing a scene graph having a hierarchical structure of nodes and connections therebetween that represent the hierarchical structure of a space, the nodes representing respective objects or spaces in the space, wherein images of the objects or spaces are respectively associated with the nodes thereof; determining that the scene graph fails to produce a task plan for completion of a task by an agent within the space; based on the determining, identifying a node, among the nodes, that is relevant to performing the task; based on the identification of the node, extracting additional data about the space from the image associated with the identified node; and generating a final task plan for completion of the task by the agent within the space, the final task plan generated based on the additional data and the scene graph.
For instance, the scope further includes that method, wherein one or more neural network models perform inference on the scene graph to determining that the scene graph fails and to generate the final task plan, and wherein the agent comprises a robot.

## Claims

1. An electronic device comprising:
one or more processors; and
a memory storing instructions that when executed by the one or more processors cause the electronic device to:
acquire a prompt that describes a task for a robot to perform in a predefined space;
attempting to generate, by a first machine-learning-based model, based on a scene graph corresponding to the predefined space and the prompt being inputted thereto, a first task plan for the robot to perform the task;
based on failure to generate the first task plan or the first task plan not enabling the robot to complete the task, provide the first machine-learning-based model with a request to extract any relevant nodes to the task from among nodes of the scene graph;
generate a candidate node by a second machine-learning-based model, based on additional modal data of the relevant node and a node generation request based on the additional modal data being inputted to the second machine-learning-based model; and
generate a second task plan for the robot to perform the task by inputting the candidate node and the prompt to the first machine-learning-based model.

2. The electronic device of claim 1, wherein the candidate node is inserted into the scene graph based on the second task plan being able to satisfy the task.

3. The electronic device of any of claims 1 and 2, wherein the instructions are further configured to, when executed by the one or more processors, cause the electronic device to:
command the robot to perform operations according to the second task plan in response to the second task plan being determined to be able to satisfy the task,
and/or
wherein the instructions are further configured to, when executed by the one or more processors, cause the electronic device to:
command the robot to search for and capture audio data or image data in response to the second task plan not being able to satisfy the task; and
insert the captured audio data or image data into the scene graph,
and/or
wherein the instructions are further configured to, when executed by the one or more processors, cause the electronic device to:
select the candidate node from among multiple generated candidate nodes; and
generate a new task plan based on the selected candidate node and apply the new task plan to update the scene graph.

4. The electronic device of any of claims 1-3, wherein
the scene graph, in an initial form, comprises levels of nodes, the levels including an object-level level, and
the additional modal data comprises image data or audio data representing a thing corresponding to a node of the object-level level.

5. The electronic device of any of claims 1-4, further comprising a storage storing the additional modal data, which is mapped to the relevant node level in the scene graph, and
the instructions are further configured to, when executed by the one or more processors, cause the electronic device to generate the candidate node and load the additional modal data from the storage based on the additional modal data being mapped to the relevant node.

6. The electronic device of any of claims 1-5, wherein the instructions are further configured to, when executed by the one or more processor, cause the electronic device to generate the candidate node to comprise attribute information of a target object based on the prompt indicating an attribute of the target object in the task.

7. The electronic device of any of claims 1-6, wherein the first machine-learning-based model is a text generation model, and
the instructions, when executed by the one or more processors, cause the electronic device to provide the first machine-learning based model with a serialized representation of the scene graph.

8. The electronic device of any of claims 1-7, wherein the first machine-learning-based model and the second machine-learning-based model are the same multi-modal generation model.

9. A method of generating a plan performed by one or more processors, the method comprising:
acquiring a prompt that describes a task for a robot to perform in a predefined space;
attempting to generate a first task plan for a robot to perform the task by inputting a scene graph corresponding to a predefined space and the prompt to a first machine-learning-based model;
based on failure to generate the first task plan or the first task plan not enabling the robot to complete the task, accessing a relevant node of the scene graph by inputting, to the first machine-learning-based model, a request for extract from the scene graph any nodes that are relevant to the task;
generating a candidate node by a second machine-learning-based model, based on additional modal data of the relevant node and a node generation request based on the additional modal data being inputted to the second machine-learning-based model; and
generating a second task plan for the robot to perform the task by providing the candidate node and the prompt to the first machine-learning-based model.

10. The method of claim 9, wherein the method further comprises inserting the candidate node into the scene graph based on the second task plan enabling the robot to complete the task,
and/or
wherein the method further comprises instructing the robot to perform operations according to the second task plan based on a determination that the second task plan enables the robot to complete the task,
and/or
wherein the method further comprises:
instructing the robot to search for and capture image or audio data based on the second task plan not being able to be generated or not enabling the robot to complete the task; and
associating the image or audio data with the scene graph.

11. The method of any of claims 9-10, wherein the generating the candidate node comprises generating multiple candidate nodes and selecting the candidate node from among candidate nodes, and
the method further comprises generating a new task plan based on the selected candidate node and applying the new task plan to update the scene graph.

12. The method of any of claims 9-11, wherein the scene graph, in an initial form, comprises levels of nodes including an object-level level, and
the additional modal data comprises audio or image data representing a thing corresponding to a node of the object-level level.

13. The method of any of claims 9-12, wherein the additional modal data is mapped to a node of a specific level in the scene graph, and
the generating the candidate node comprises, based on the mapping, loading the additional modal data mapped from a storage when generating the candidate node.

14. The method of any of claims 9-13, wherein the candidate node is generated to comprise attribute information of a target object based on the prompt indicating an attributes of the target object in the task.

15. Computer program product comprising instructions which, when the program is executed by a computer, cause the computer to perform the method of any of the claims 9-14.
